# EUROPÄISCHE PATENTANMELDUNG

(11) **EP 3 593 974 A1**
(43) Veröffentlichungstag der Anmeldung: **15.01.2020**
(21) Anmeldenummer: 19177404.1
(22) Anmeldetag: 29.05.2019
(51) Int. Cl.: B29C 44/12, B32B 5/20, B29C 44/14, B05C 5/00

(54) **VERFAHREN ZUR HERSTELLUNG VON SANDWICH-PANEELEN FÜR INSBESONDERE NUTZFAHRZEUGAUFBAUTEN VON KÜHLFAHRZEUGEN**

(30) Priorität: 09.07.2018 DE 102018005393
(71) Anmelder: Fahrzeugwerk Bernard Krone GmbH & Co. KG, 49757 Werlte (DE)
(72) Erfinder: Päplow, Friedrich-Wilhelm, 19376 Poitendorf (DE)
(74) Vertreter: Pott, Ulrich

(57) **Zusammenfassung**

Die Erfindung bezieht sich auf ein Verfahren zur Herstellung von Sandwich-Paneelen für insbesondere Nutzfahrzeugaufbauten von Kühlfahrzeugen, bei denen eine Innendeckschicht und eine Außendeckschicht des Sandwich-Paneels unter Zwischenlage einer PU-Schaumkernschicht miteinander verbunden werden, wobei die Innen- und die Außendeckschicht vor dem Schäumvorgang der Schaumkernschicht mit einem PU-Haftvermittler versehen werden. Um zwischen Innendeckschicht, Außendeckschicht und Schaumkernschicht zu erhöhen ist vorgesehen, dass die Inne- und/oder Außendeckschicht des Sandwich-Paneels vor dem Schäumvorgang der Schaumkernschicht mit einem Schmelzklebstoff als PU-Haftvermittler versehen wird bzw. werden, wobei der Schmelzklebstoff als Faden 3 über eine Düse 2 in Kurvenbahnen 4 auf die Innen- und/oder Außendeckschicht 1 des Sandwich-Paneels aufgetragen wird (Fig. 2).

## Beschreibung

Die Erfindung bezieht sich auf ein Verfahren zur Herstellung von Sandwich-Paneelen für insbesondere Nutzfahrzeugaufbauten von Kühlfahrzeugen, bei dem eine Innendeckschicht und eine Außendeckschicht des Sandwich-Paneels unter Zwischenlage einer PU-Schaumkernschicht miteinander verbunden werden, wobei die Innen- und die Außendeckschicht vor dem Schäumvorgang der Schaumkernschicht mit einem PU-Haftvermittler versehen werden.

Kühlkoffer-Sandwich-Paneele für Nutzfahrzeugaufbauten werden herkömmlicher Weise mit einem PU-Schaumstoff ausgerüstet. Dieser wird im flüssigen Zustand in einen Hohlraum des Sandwich-Paneels eingeführt, wo der PU-Schaumstoff reagiert und expandiert bis zur vollständigen Füllung des zu isolierenden Sandwich-Paneel-Hohlkörpers. Üblicherweise werden dem Hohlkörper zugewandte Seiten einer Innen- und einer Außendeckschicht des Sandwich-Paneels mit zuvor einem flüssigen PU-Haftvermittler versehen, um die Innen- und Außendeckschichten stärker mit der Schaumkernschicht zu verbinden.

Bei herkömmlichen Schäumvorgängen der Schaumkernschicht werden die Innen- und Außendeckschichten eines Kühlkoffer-Sandwich-Paneels getrennt voneinander behandelt. So wird beispielsweise eine Innendeckschicht aus einem metallischen Material mit einem PU-Haftvermittler verarbeitet, indem die Außenseite der Innendeckschicht nach unten auf einem Schäumtisch liegt. Die Ränder der Innendeckschicht werden mit Schaumleisten begrenzt. Vor dem Schäumvorgang wird die Innendeckschicht mit einem Primermaterial benetzt, welches im Nassverfahren von oben auf die Innendeckschicht fallend aufgetragen wird, so dass die Innendeckschicht liegend beschichtet wird. Dieser Primer soll später als Haftvermittler zwischen der Innendeckschicht und dem später aufzubringenden PU-Schaum dienen. Direkt nach dem Auftragen des Primers muss der noch flüssige PU-Schaum auf den noch nassen Primer aufgetragen werden. Es handelt sich um ein sogenanntes Nass-in-Nass-Verbindungsverfahren.

Nachteilig hierbei ist, dass bei dem bekannten Verfahren mit dem Einsatz von flüssigen Haftvermittlern nur eine sehr begrenzte Reaktionszeit von 1 bis 15 Minuten zur Verfügung steht. Nach Ende der Reaktionszeit reagiert der Schaum nicht mehr ausreichend mit dem flüssigen Haftvermittler, so dass keine ausreichende Festigkeit der Haftverbindung zwischen der Innen- oder Außendeckschicht und einer Schaumkernschicht erreicht werden kann. Das führt in der Praxis dazu, dass ein enormer Fertigungsdruck vorherrscht und die Möglichkeit besteht, dass Paneele gefertigt werden, bei denen keine hinreichende Verbindung zwischen der Innen- oder Au-ßendeckschicht und der inneren Schaumkernschicht geschaffen werden konnte. Derartige Paneele sind nicht mehr zu verarbeiten.

Darüber hinaus enthalten die bisher verwendeten Haftvermittler reaktive Komponenten, die Gefahrstoffe enthalten und gesundheitsgefährdend sind, was während der Herstellung, des Transportes, der Lagerung, der Verarbeitung und auch bei der Entsorgung berücksichtigt werden muss. Zudem sind bei der bisherigen Herstellungsweise Prozessparameter exakt einzuhalten wie z. B. Außentemperatur, Werkzeugtemperatur, Werkstücktemperatur und Luftfeuchtigkeit. Abweichungen von diesen Prozessparametern führen zu unkontrollierten Reaktionen, welche das Ergebnis der Verbindung zwischen der Außendeckschicht, der Innendeckschicht und der Schaumkernschicht nachhaltig negativ beeinträchtigen können.

Es ist Aufgabe der Erfindung, ein Verfahren zur Herstellung von Sandwich-Paneelen zu schaffen, mit dem fertigungsoptimiert eine innige Verbindung zwischen einer Innendeckschicht, einer Außendeckschicht und einer Schaumkernschicht für die Fertigung eines Sandwich-Paneeles geschaffen werden kann.

Zur Lösung dieser Aufgabe sieht das eingangs genannte Verfahren nach der Erfindung vor, dass die Innen- und/oder Außendeckschicht des Sandwich-Paneels vor dem Schaumvorgang der Schaumkernschicht mit einem Schmelzklebstoff als PU-Haftvermittler versehen wird bzw. werden, wobei der Schmelzklebstoff als Faden über eine Düse in Kurvenbahnen auf die Innen- und/oder Außendeckschicht des Sandwichpaneels aufgetragen wird. Mit dieser Verfahrensweise kann der Schmelzklebstoff unabhängig und entkoppelt von dem Schäumvorgang auf die Innendeckschicht und/oder die Außendeckschicht aufgetragen werden. Verwendete Schmelzklebstoffe können bis zu mindestens 15 Tagen nach dem Auftragen auf eine der Deckschichten weiterverarbeitet werden und können trotzdem eine optimale Verbindung zwischen der Außendeckschicht bzw. der Innendeckschicht und der Schaumkernschicht erzielen. Dadurch kann die Beschichtung einer Außen- und Innendeckschicht mit dem Schmelzklebstoff völlig entkoppelt und daher asynchron zum Schäumprozess bzw. Schäumvorgang erfolgen. Das macht den Beschichtungsprozess mit dem Schmelzklebstoff zeitlich entkoppelbar und kann auch räumlich außerhalb einer Schaumauftragsanlage durchgeführt werden. Eine Schmelzklebschicht ist darüber hinaus prozessparameterunabhängig, so dass keine spezifische Außentemperatur, Werkzeugtemperatur, Werkstückemperatur und/oder Luftfeuchtigkeit einzuhalten sind.

Der Schmelzklebstoff wird als Faden über eine Düse zugeführt. Dabei wird die Düse so geführt, dass der Faden als Rotationsfadenauftrag aufgebracht wird, womit eine günstige Verteilung der Klebefäden ermöglicht ist. Es ist ebenfalls möglich, Fäden mehrfach übereinanderliegend aufzubringen, so dass dieser Rotationsfadenauftrag eine Art 3D-Struktur erzeugt, in die sich der Schaum hineinlegen kann, was zu einer enormen Verbundfestigkeit zwischen der Innen- und Außendeckschicht und der Schaumkernschicht führt. Darüber hinaus ist es möglich, mittels einer Drucklufteinmischung in den Schmelzklebestofffaden die Fadenoberfläche zu vergrößern. Das führt auch zur Einsparung von Schmelzklebestoffmaterialien. Dieses vorbeschriebene Auftragsverfahren führt neben der Verbesserung der Adhäsion zwischen dem Klebestoff und dem Schaum aufgrund seiner Topografie auch zu einer physikalischen Verzahnung zwischen Klebstoff und Schaum.

Als besonders wirkungsvolle Schmelzklebestoffe haben sich Polyolefinschmelzklebestoffe und ein thermoplastischer Kautschuk erwiesen.

Zur weiteren Weiterbildung der Erfindung wird auf weitere Unteransprüche verwiesen. Ein Sandwich-Paneel ist in Anspruch 10 angegeben und ein Nutzfahrzeugaufbau in Anspruch 11.

Zur weiteren Erläuterung wird auf die nachfolgenden Ausführungen und die Zeichnung verwiesen. In der Zeichnung zeigt:
- Fig. 1:: In einer Seitenansicht schematisch das Aufbringen eines Schmelzklebstofffadens über eine Düse auf eine Außen- oder Innendeckschicht;
- Fig. 2:: eine Draufsicht auf die Deckschicht mit aufgebrachten Schmelzklebstofffäden, die jeweils als Kurvenbahnen nach Art von endlosen Ellipsen aufgebracht sind.

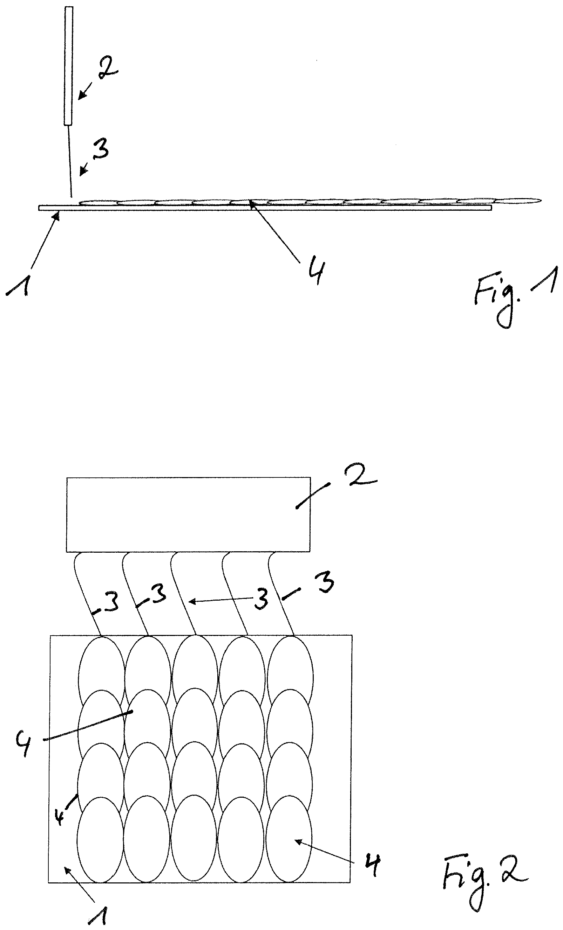

In Fig. 1 ist mit 1 eine Innen- oder Außendeckschicht beziffert, der über einer Auftragsdüse 2 ein PU-Haftvermittler zugeführt werden soll. Dieser PU-Haftvermittler ist ein Schmelzklebestoff und wird fallend als Faden 3 der Deckschicht 1 zugeführt und zwar derart, dass nacheinander Kurvenbahnen erzeugt werden und zwar als jeweils endlose Ellipsen 4, wie sie aus Fig. 2 in Draufsicht hervorgehen.

## Patentansprüche

1. Verfahren zur Herstellung von Sandwich-Paneelen für insbesondere Nutzfahrzeugaufbauten von Kühlfahrzeugen, bei dem eine Innendeckschicht (1) und eine Außendeckschicht (1) des Sandwich-Paneels unter Zwischenlage einer PU-Schaumkernschicht miteinander verbunden werden, wobei die Innen (1)- und die Außendeckschicht (1) vor dem Schäumvorgang der Schaumkernschicht mit einem PU-Haftvermittler versehen werden, **dadurch gekennzeichnet, dass** die Innen- und/oder Außendeckschicht (1) des Sandwich-Paneels vor dem Schäumvorgang der Schaumkernschicht mit einem Schmelzklebstoff als PU-Haftvermittler versehen wird (werden), wobei der Schmelzklebstoff als Faden (3) über eine Düse (2) in Kurvenbahnen (4) auf die Innen- und/oder Außendeckschicht (1) des Sandwich-Paneels aufgetragen wird.

2. Verfahren nach Anspruch 1, **dadurch gekennzeichnet, dass** der Schmelzklebstoff als PU-Haftvermittler derart aufgetragen wird, dass er aus der Düse (2) herausströmt und mittels einer Luftströmung einen Drall erhält, durch den die Kurvenbahnen (4) erzeugt werden.

3. Verfahren nach Anspruch 1 oder 2, **dadurch gekennzeichnet, dass** die Kurvenbahnen (4) nach Art von endlosen Ellipsen erzeugt werden.

4. Verfahren nach einem der Ansprüche 1 bis 3, **dadurch gekennzeichnet, dass** die fadenförmigen Kurvenbahnen (4) in einer 3D-Struktur auf die Innen- und/oder Au-ßendeckschicht (1) aufgetragen werden.

5. Verfahren nach einem der Ansprüche 1 bis 4, **dadurch gekennzeichnet, dass** dem aus der Düse (2) austretenden Faden (3) des Schmelzklebstoffes Druckluft zugemischt wird.

6. Verfahren nach einem der vorhergehenden Ansprüche, **dadurch gekennzeichnet, dass** als Schmelzklebstoff ein Polyolefin-Schmelzklebstoff verwendet wird.

7. Verfahren nach einem der vorhergehenden Ansprüche, **dadurch gekennzeichnet, dass** als Schmelzklebstoff ein thermoplastischer Kautschuk verwendet wird.

8. Verfahren nach einem der vorhergehenden Ansprüche, **dadurch gekennzeichnet, dass** mehrere übereinanderliegende Kurvenbahnen (4) aus dem Schmelzklebstoff als PU-Haftvermittler auf die Innen- und/oder Außendeckschicht aufgetragen werden.

9. Verfahren nach einem der vorhergehenden Ansprüche, **dadurch gekennzeichnet, dass** vor dem Auftragen des Schmelzklebstoffes als PU-Haftvermittler die Außendeckschicht (1) und/oder die Innendeckschicht (1) mit einem PU-Lack versehen wird (werden).

10. Sandwich-Paneel für insbesondere ein Nutzfahrzeugaufbau von insbesondere Kühlfahrzeugen, hergestellt nach einem Verfahren nach einem der Ansprüche 1 bis 9.

11. Nutzfahrzeugaufbau für insbesondere Kühlfahrzeuge, hergestellt mit einem Sandwich-Paneel nach dem vorhergehenden Anspruch.
